# EUROPEAN PATENT APPLICATION

(11) **EP 1 528 774 A1**
(43) Date of publication of application: **04.05.2005**
(21) Application number: 03292722.0
(22) Date of filing: 30.10.2003
(51) Int. Cl.: H04M 3/22, H04L 12/26, H04M 7/00

(54) **Method and system of providing lawful interception of calls**

(71) Applicant: ALCATEL, 75008 Paris (FR)
(72) Inventor: Lutz, Markus, Dipl.-Ing., 71131 Jettingen (DE); Langenbucher, Gerhard G., Dr.-Ing., 74321 Bietigheim-Bissingen (DE)
(74) Representative: LOUIS- PÖHLAU- LOHRENTZ

(57) **Abstract**

The invention concerns a method for providing lawful interception within a communication network (1) as well as an interception gateway (3) and a media gateway controller (4). Media gateways (21 to 24) transmit RTP/IP packets comprising the content of an intercepted communication to the interception gateway (3) adapted to receive such content of communication from at least two media gateways. The media gateway controller transmits corresponding interception related information of said communication to the interception gateway (3). The interception gateway transmits said interception related information and said corresponding communication content together to a corresponding monitoring facility (61 to 63).

## Description

The present invention relates to a method for providing lawful interception within a communication network as well as an interception gateway and a media gateway controller for supporting lawful interception within such communication network.

Lawful interception is a task performed by authorized organizations, the so-called Law Enforcement Agencies. These are entitled to intercept, monitor and register the communication activities of an observed telecommunication user, who is set target of interception. Lawful interception may only be performed, if it has been approved by a legal entity. The actual measures to intercept are executed by the telecommunication service provider, which may be a network operator, an access provider or a service provider.

In classical telephone networks, interception did not require any function of the switching system itself. Generic connections at the main distribution frame could be used instead.

With the introduction of new services in a circuit switched network, like mobile communication and/or supplementary services (e.g. call diversion, conference calls), lawful interception can only be guaranteed by functions, which need to be integrated in the switching node.

The European Telecommunication Standards Institute (ETSI) has defined further technical requirements. These requirements define three interfaces: X1: administrative task (maybe also provided on paper or fax); X2: network signaling (near real time); and X3: intercepted user data (near real time). The interface X1 carries interception requests, authorization documents, encryption keys and the like. The exact definitions of the three interfaces are normally specified by national regulatory authorities. Most of them refer to international standards like ES 201 671 for ETSI market or J-STD 025 A (CALEA) for ANS! market.

It is the object of the present invention to provide an improved way of lawful interception within NGN networks (NGN = next generation networks).

The object of the present invention is achieved by a method for providing lawful interception within a communication network, comprising the steps of: transmitting RTP/IP packets comprising the content of an intercepted communication between two or more users of the communication network from a media gateway of the communication network to an interception gateway adapted to receive such content of communication from at least two media gateways; transmitting corresponding interception related information of said communication from a media gateway controller, which provides call control functions for users of the communication network to said interception gateway; and transmitting said interception related information and said corresponding communication content together from the interception gateway to a corresponding monitoring facility. The object of the present invention is further achieved by an interception gateway for supporting lawful interception within a communication network, the interception gateway having a first interface adapted to receive data from at least one media gateway controller, which provides call control functions for users of the communication network, a second interface adapted to receive RTP/IP data streams from at least two media gateways of the communication network and a third interface adapted to transmit interception data to at least one monitoring facility, the interception gateway comprises a control unit adapted to receive RTP/lP packets comprising the content of an intercepted communication between two or more users of the communication network from a media gateway of the communication network via the second interface, to receive corresponding interception related information of said communication from the media gateway controller via the first interface and to transmit said interception related information and said corresponding communication content together to a corresponding monitoring facility via the third interface. The object of the present invention is further achieved by a media gateway control adapted to provide call control functions for users of a communication network, the media gateway controller comprises an interception control unit for supporting lawful interception within the communication network, the interception controller unit is adapted to determine a media gateway corresponding to an interception target and to send a control message to the determined media gateway causing transmission of RTP/IP packets from said media gateway to an interception gateway, the RTP/IP packets comprise the content of an intercepted communication between two or more users of the communication network, wherein the interception control unit is adapted to create for the interception target interception related information and to transmit said interception related information to said interception gateway, the interception control unit causes the interception gateway to transmit said interception related information and said corresponding communication content together to a corresponding monitoring facility.

A centralized network node, the interception gateway, provides the media stream of an intercepted target subscriber to the relevant monitoring facility. Accordingly, the network nodes of the transport plane which are responsible for the media stream has not to care about lawful interception. Even, the nodes of the control plane, e.g. the softswitch, have not to care about submission of media streams to Law Enforcement Agencies. These tasks are provided by a centralized new kind of network node, the interception gateway which provides the functionalities of submitting interception related information and communication content of selected intercept targets to Law Enforcement Agencies. Various advantages are achieved by such approach:
The central functionality of an interception gateway may be shared by various media gateways which increases the efficiency of the whole system. Media gateways have not to provide specific functionalities directed to lawful interception. Further, mediation gateways and media gateway controllers have not to support specific interfaces for supporting such functionalities and have not to be adapted to local lawful interception requirements. Further advantages are achieved in multi-vendor environments and heterogeneous networks. The media gateway controller has not to take care on specific, proprietary interfaces of various media gateways for supporting lawful interception functionalities. Consequently, the invention provides a very cost-effective solution for providing lawful interception within next generation networks.

Further advantages are achieved by the embodiments indicated by the dependent claims.

According to a preferred embodiment of the invention, the interception gateway comprises a SS7 signaling interface, a PSTN trunking interface and a conversion unit converting a RTP/IP packet streams to PCM circuit switched speech (PSTN = public switch telecommunication network; IP = internet protocol; RTP = real time protocol; PCM = pulse code modulation). Dependent on the communication constraints of the respective monitoring facility, the interception gateway communicates via an IP network or via a PSTN network with monitoring facilities of Law Enforcement Agencies. The interception gateway provides the media streams of an intercepted target subscriber to the relevant monitoring center with the possibility to use two different delivery options dependent on the nature of monitoring facility. The interception gateway is capable to support different kinds of monitoring facilities which increase the flexibility of the system.

According to a first approach, the RTP/IP data streams of an intercepted communicated are forced to be routed via the interception gateway through the communication network. In this case the interception gateway is responsible for copying of RTP/IP data streams of intercepted communications. Thereby, no local call delay is caused by special treatment for lawful interception. Lawful interception does not have impacts for the media gateways. This means that you have a vendor independent solution.

According to an alternative approach, the RTP/IP data streams associated with an intercepted communication are copied by the media gateway and sent to the corresponding interception gateway. This approach eliminates deficiencies of pure conversation quality in case of local calls (hair-pinning and grooming) since it is not necessary to have for interception of such calls another gateway in the loop.

These as well as other features and advantages of the invention will be better appreciated by reading the following detailed description of presently preferred exemplary embodiments taken in conjunction with accompanying drawings of which:
- Fig. 1: is a block diagram of a communication system with a media gateway controller and an interception gateway according to a first embodiment of the invention.
- Fig. 2: is a block diagram of a communication system with a media gateway controller and an interception gateway according to a further embodiment of the invention.

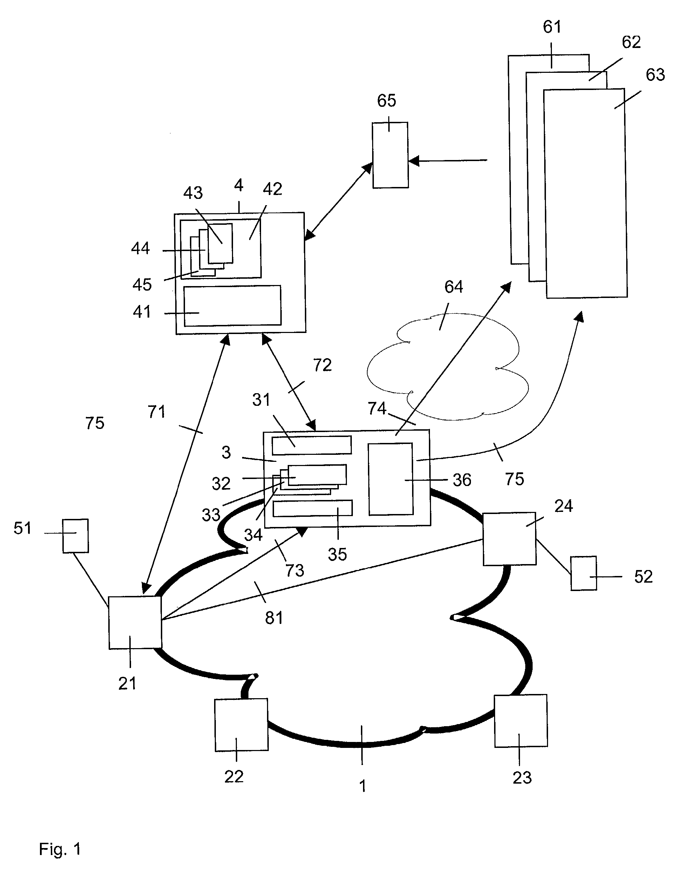

Figure 1 shows a NGN communication system (NGN = next generation network) which is based on a distributed IP network (IP = Internet Protocol). The architecture of this communication system is split into two main sections, the control plane, which is responsible for controlling the communication connections between users of the communication system and the transport plane, which is responsible for the transportation of the associated media streams. Fig. 1 shows a communication network 1, several media gateways 21 to 24, an interception gateway 3, a media gateway controller 4 and a network management unit 65 of this communication system. Further, the Fig. 1 shows several monitoring facilities 61 to 63 of Law Enforcement Agencies and a PSTN network 64 (PSTN = Public Switched Telephone Network).

The communication network 1 is an IP based network, which may comprise a plurality of different kinds of networks interlinked via an IP protocol. For example, the communication network is formed by various interlinked physical Ethernet or ATM networks (ATM = Asynchrone Transfer Mode).

The media gateways 21 to 24 support stream-like communication, as voice, fax or video-communication between two or more terminals of the communication network 1, connected to these media gateways 21 to 24. For example, Fig. 1 shows two terminals 51 and 52 connected to the media gateway 21 and 24, respectively. Further, the media gateways 21 to 24 may provide seamless working of voice and fax connections between public switched telephone network and the IP based communication network 1. PSTN terminals, local exchanges or private brand exchanges may be connected to the media gateways 21 to 24, which support connections between all terminals connected to such network elements through the IP based communication network 1.

For example, the communication networks 21 to 24 are media gateways according to the MEGACO/ H.248 standard providing voice or packet capabilities and serve as key transmission element between circuit-switched and packet-switched telephone networks. Such media gateways provide VolP trunking, TDM-TDM hair-pinning and TDM-PRI grooming capabilities (VolP = Voice over IP; TDM = Time Division Multiplex).

For example, the media gateways 21 to 24 comprise a circuit interface, module providing an TDM interface to the PSTN, a packet interface module comprising an internet interface to the communication network 1, a switching fabric, a media conversion module and a system control module providing a signaling and management interface and controlling control and signal protocol stacks.

The media gateway controller 4 is a softswitch, which is part of the control plane of the NGN communication system. Such softswitch provides call control functions for network elements of the transport plane of the NGN communication system. The media gateway controller 4 provides call control functions for the media gateways 21 to 24, i.e. it controls the establishment of connections between the media gateways 21 to 24 through the IP based communication network 1. In addition to the functionalities of a normal softswitch, the media gateway controller 4 provides interception control functionalities.

Further, the NGN communication system comprises the interception gateway 4 responsible for the transmission of interception data to Law Enforcement Agencies (=LEA).

A Law Enforcement Agency (=LEA) specifies and interception target and sends this information, for example via fax, to an administration center of the network operator (HI1 interface). This administrative information is input in the network management unit 65. A request for interception, which specifies the interception target described by this administrative information, is sent from the network management unit 65 to the corresponding media gateway controller, e.g. to the media gateway controller 4.

In case a lawful interception target is identified as a subscriber connected via one of the media gateways controlled by the media gateway controller 4, the media gateway controller 4 initiates a forced routing mechanism via the interception gateway for such interception target. In the following, RTP/IP packets of the media streams assigned to the interception target are transmitted by media gateways of the communication network 1 to the interception gateway 3 which is responsible for forwarding these media streams to the corresponding edge media gateway. Interception gateway 3 is responsible for copying and routing the intercepted media stream towards the corresponding monitoring facility. Further, the corresponding interception related information are transmitted from the media gateway controller 4 to the interception gateway 3 which is also responsible for transmitting these information towards the corresponding monitoring facility. The control and the intelligent of this scenario reside in the media gateway controller 4 which is in addition responsible for creating the interception related information and managing the interception targets.

According to a second approach, the replication of the media stream is performed at the media gateway level.

In the following, the details of the system are described by hand of several detailed embodiments:
The media gateway controller 4 is constituted by one or several interconnected computers forming a hardware platform, a software platform and several application programs executed based on this hardware and software platform. The functionalities of the media gateway controller 4 are performed by the execution of such software by the hardware of the media gateway controller 4. From the functional point of view, the media gateway controller 4 comprises a media gateway control unit 41, an interception control unit 42 and several interception processes 43 to 45.

The interception control unit 42 controls the interception process, administrates the interception targets and creates the processes 43 to 45. When receiving an interception target from the network management unit 65, the interception control unit 42 determines the user of the communication network specified as interception target and registers this interception target within a data base. For example following information is registered for an interception target:
- Identification of the interception subject: Target identity (Directory number, SIP-URL, SIP-TEL etc.)
- Lawful interception identifier (= LIID);
- Further specification of type of interception: kind of information to be provided (IRI wholly or both CC and IRI; IRI = Intercept Related Information, CC = Content of Communication), mode information (single / combined);
- H12 destination address of the associated monitoring facility (LEMF = Law Enforcement Monitoring Facility), to which the information related information records (IRI-records) shall be sent;
- H13 destination address of the monitoring facility, to which the content of communication (CC) shall be sent;
- Other network-dependent parameters (e.g. type of media stream to be intercepted, CUG-Idx VPN etc.; CUG = Closed User Group Index).

When a call has been identified by help of such registered data to be subject of interception, the interception control unit creates an interception process, for example the interception process 43, which determines the relevant media gateway being in position to intercept the media streams of the corresponding communication.

For example, the interception control unit 42 determines the media gateway 21 to be in a position to intercept an interesting communication 81 between the terminal 51 and the terminal 52. The interception process 43 instructs the media gateway 21 via standard MEGACO/H.248, to make a copy of the RTP/lP media streams of the communication 81 and forward the intercepted RTP/IP packets to the interception gateway 3. In parallel, it instructs the interception gateway 3 to receive these copied RTP/IP media streams and forward these media as content of communication records to the corresponding monitoring facility.

Further, the interception task 43 creates interception related information for the communication 81, e.g. lawful interception identifier, bearer information or direction indication. In principal, the interception related information can comprise all information or data associated with the telecommunication service of the identified target apparent to the network. It can include signaling information used to establish the telecommunication service and to control its progress, time stamps, and, if available, further information such as supplementary service information or location information. Preferably, only information being part of standard signaling procedures shall be used within call-related interception related information. If the identity of the other party (non-target) is not available, the interception process 43 has to create or request them from the origin.

Further, the interception process 43 transmits the interception related information to the interception gateway 3 and instructing the interception gateway 3 to forward this information to the corresponding monitoring facility.

Preferably, the sending of the interception related information should take place as soon as possible, after the relevant information is available.

As aforementioned, the functionality responsible for the replication of the RTP/IP streams on request of the interception control unit may be located within the media gateway 21 or in the interception gateway 3. Accordingly, the interception process 43 instructs the media gateway 21 to copy and forward the media streams or route the media streams via the interception gateway 3.

The interception gateway 3 is constituted by one or several computers forming a hardware platform and several software applications executed based on this hardware platform. The functionalities of the interception gateway 3 are provided by the execution of the software applications on this hardware platform. From functional point of view, the interception gateway 3 comprises two communication units 31 and 35, the conversion unit 36 and several control units 32 to 34.

The interception gateway 3 is a centralized network element of the NGN communication system. It may serve a plurality of media gateways as well as a plurality of media gateway controllers. But, preferably, each interception gateway is associated to a specific media gateway controller. Such interception gateways are under control of one or several media gateway controllers.

The interception gateway 3 is under the control of the media gateway controller 4.

According to a preferred embodiment of the invention, the interception gateway controller 3 is derived from a standard media gateway and provides an MEGACO/ H.248 interface to the media gateway controller.

The communication unit 31 provides the communication capabilities to communicate via an interface 72 with the media gateway controller 4. For example, the communication unit 31 provides the necessary functions to process the MEGACO/ H.248 protocol stack. But, it is also possible, that the communication between the media gateway controller 4 and the interception gateway 3 is based on a protocol different from protocols used for interaction between media gateway and media gateway controller. For example, a proprietary protocol is used.

The communication unit 35 provides the communication functions for receiving RTP/IP packet streams from elements of the communication network 1. In the case, where the RTP/IP media stream is copied by the interception gateway, the communication unit 35 comprises a media interception unit adapted to replicate RTP/IP data streams of communications between users of the communication network 1, routed via the interception gateway 3.

The conversion unit 36 provides a conversion between RTP/IP packet streams and PCM circuit switch speech.

In addition, the interception gateway 1 can comprise a communication content mediation unit and/or an interception related information mediation unit. These units adapt interception information provided by the media gateways 21 to 24 and the media gateway controller 3 to the interception data format requested by the respective monitoring facility. For example, these units may adapt IRI records to specific IRI record formats and aggregate such IRI records for delivering to the same monitoring facility.

Each of the control units 32 to 34 is responsible for the control of a specific interception task. For example, the control unit 32 is responsible for the interception of the communication 81. The control unit 32 receives via the interface 72 interception related information from the media gateway controller 4 and receives RTP/IP packets from the media gateway 21 via the interface 73. The control unit 32 transmits these corresponding data, the interception related information and the communication content, together to the corresponding monitoring facility. Further, the control unit 32 controls the adaptation of the data format to the respective constraints of the corresponding monitoring facility. For example, it checks whether such monitoring facility has to be contacted via a PSTN network or via an IP network. Dependent on the results of this check, the communication content and the interception related data are transmitted via an IP interface 75 or via the PSTN interface 74 to the monitoring facility. The interception gateway 3 provides an SS7 signaling interface and a PSTN trunking interface for communicating via the PSTN network 64. The conversion unit 36 is used to convert the RTP/IP packet stream to PCM circuit switched speech. In this case, the interception gateway acts as trunking gateway which can be supported with SS7 signaling from the media gateway control.

In addition, the control unit 32 supports multi Lawful Interception Agency surveillances for the same lawful interception target, i.e. the control unit 32 transmits the same interception related information and communication content data to two or more monitoring facilities in parallel. Further, it supports standard security procedure, for example encryption, to submit the interception related information and communication content data in a secure way via the IP interface 75. In addition, it supports decryption of intercepted RTP/IP streams in case of encryption mechanisms applied by terminal or media gateway. Further, it supports all relevant codices used within the communication network 1.

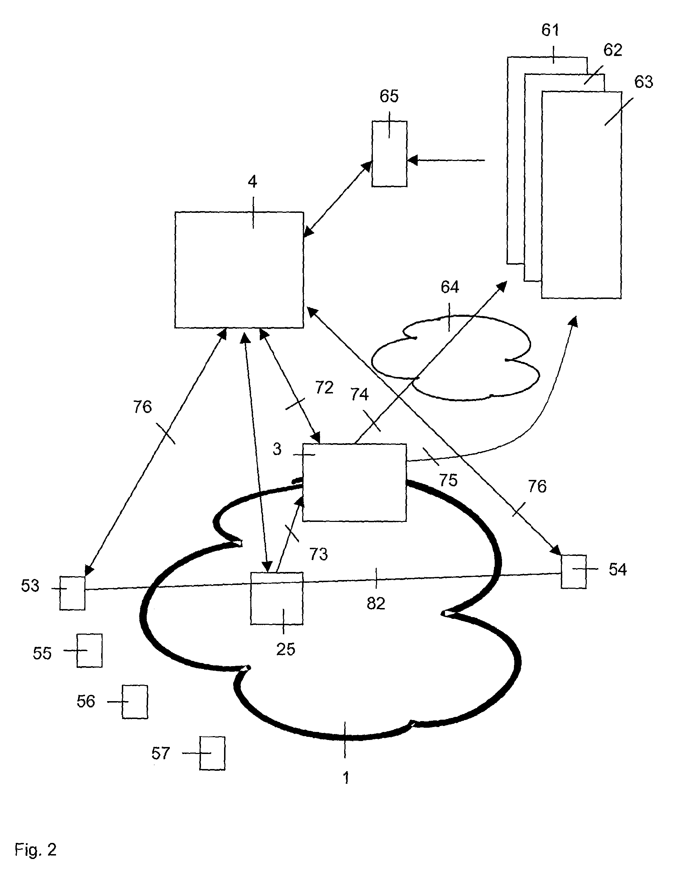

Fig. 2 shows a possibility to intercept IP telephone and multi media services which use the internet technology.

Fig. 2 shows the communication network 1, several IP terminals 53 to 54, a media gateway 25, the interception gateway 3, the media gateway controller 4, the network management unit 65, the PSTN network 64 and the monitoring facilities 61 to 63.

The media gateway 25 is a network element used to control the flow of IP packets into the core network of the network operator. For example, it does not route any packets on a low layer (layer 3 or 4), such as IP routers 2 do.

Further, the media gateway 65 can be a middle-box, providing services to IP terminals.

The media gateway 25 controls multi media flows from or into the operator's network. The media gateway controller 4 controls the media gateway 25 via a gateway control protocol such as MEGACO/H.248. The IP terminals 53 to 57 communicate with the media gateway controller 4 with standard protocol such as SIP and H.323 for establishing stream-like communications through the communication network 1.

As an addition, the media gateway 25 can also be used for interception the media streams, for example a communication 82 between the terminals 53 and 54, in the same way as described for the media gateway 21 of Fig. 1.

## Claims

1. An interception gateway (3) for supporting lawful interception within a communication network (1),
**characterized in**
**that** the interception gateway (3) has a first interface (72) adapted to receive data from at least one media gateway controller (4), which provides call control functions for users of the communication network (1), a second interface (73) adapted to receive RTP/IP data streams from at least two media gateways (21, 22, 23, 24) of the communication network (1) and a third interface (74, 75) adapted to transmit interception data to at least one monitoring facility (61, 62, 63); and in that the interception gateway (3) comprises a control unit (32, 33, 34) adapted to receive RTP/IP packets comprising the content of an intercepted communication (81, 82) between two or more users of the communication network (1) from a media gateway (51, 52, 53, 54, 55) of the communication network (1) via the second interface (73), to receive corresponding interception related information of said communication (81, 82), e.g. lawful interception ID, bearer information or direction indication, from the media gateway controller (4) via the first interface (72) and to transmit said interception related information and said corresponding communication content together to a corresponding monitoring facility (61, 62, 63) via the third interface (74, 75).

2. The interception gateway (3) of claim 1
**characterized in**
**that** the interception gateway (3) comprises a SS7 signaling interface (74), a PSTN trunking interface (74) and a conversion unit (36) converting RTP/IP packet streams to PCM circuit switched speech.

3. The interception gateway (3) of claim 1
**characterized in**
**that** the control unit is adapted to communicate via an IP network or via an PSTN network (64) with monitoring facilities (61, 62, 63), dependent on the communication constraints of the respective monitoring facility (61, 62, 63).

4. The interception gateway (3) of claim 1
**characterized in**
**that** the control unit comprises a communication content mediation unit and an interception related information mediation unit adapting interception information provided by the media gateways (21, 22, 23, 24, 25) and the media gateway controller (4) to the interception data format requested by the respective monitoring facility (61, 62, 63).

5. The interception gateway (3) of claim 1
**characterized in**
**that** the control unit comprises a media interception unit adapted to replicate RTP/IP data streams of communications (81, 82) between two or more users of the communication network (1).

6. A method for providing lawful interception within a communication network (1)
**characterized in**
**that** the method comprises the steps of:
transmitting RTP/IP packets comprising the content of an intercepted communication (81, 82) between two or more users of the communication network (1) from a media gateway (21, 22, 23, 24, 25) of the communication network (1) to an interception gateway (3) adapted to receive such content of communication from at least two media gateways (21, 22, 23, 24, 25);
transmitting corresponding interception related information of said communication (81, 82), e.g. lawful interception identifier, bearer information or direction indication, from a media gateway controller (4), which provides call control functions for users of the communication network (1, 2) to said interception gateway (3); and
transmitting said interception related information and said corresponding communication content together from the interception gateway (3) to a corresponding monitoring facility (61, 62, 63).

7. The method of claim 6,
**characterized in**
**that** the media gateway (21, 22, 23, 24, 25) copies RTP/IP data streams associated to said communication (81, 82) and send the copied data to said interception gateway (3).

8. The method of claim 6,
**characterized in**
**that** the method comprising the further steps of:
routing RTP/IP data streams of said communication (81, 82) via the interception gateway (3) through the communication network (1); and
copying by the interception gateway (83) for interception purpose such RTP/IP data streams routed by the interception gateway (3).

9. The method of claim 6,
**characterized in**
**that** the media gateway controller (4) communicates via a SIP protocol with terminals (53, 54) of the communication network (1) and the media gateway (25) is a middle box controlling multi media flow from or into an operators network.

10. An media gateway controller (4) adapted to provide call control functions for users of a communication network (1)
**characterized in**
**that** the media gateway controller (4) comprises an interception control unit (42) for supporting lawful interception within the communication network (1), the interception control unit (42) is adapted to determine a media gateway (21, 25) corresponding to an interception target and to send a control message to the determined media gateway (21, 25) causing the transmission of RTP/IP packets from said media gateway (21, 25) to an interception gateway (3), the RTP/IP packets comprise the content of an intercepted communication (81, 82) between two or more users of the communication network (1); and in that the interception control unit is adapted to create for the interception target interception related information, e.g. lawful interception identifier, bearer information or direction indication, and to transmit said interception related information to said interception gateway (3), the interception control unit causing the interception gateway to transmit said interception related information and said corresponding communication content together to a corresponding monitoring facility (61, 62, 63).
